# FASCICULE DE BREVET EUROPEEN

(11) **EP 1 785 287 B1**
(45) Date de publication et mention de la délivrance du brevet: **21.04.2010**
(21) Numéro de dépôt: 06291734.9
(22) Date de dépôt: 07.11.2006
(51) Int. Cl.: B60C 23/08, G01B 21/32

(54) **Système de caractérisation de l'action d'un pneumatique d'un véhicule sur le sol et du sol lui-même**
Vorrichtung zur Feststellung der Aktion eines Fahrzeugreifens auf den Boden und zur Festellung der Bodensart
System for characterising the action of a vehicle tire on the ground and for characterising the ground

(30) Priorité: 10.11.2005 FR 0511455
(43) Date de publication de la demande: 16.05.2007
(73) Titulaire: CENTRE NATIONAL DU MACHINISME AGRICOLE DU GENIE RURAL DES EAUX ET DES FORETS (CEMAGREF), 92160 Antony (FR)
(72) Inventeur: Marionneau, Anicet, 03110 Carmeil (FR); Chanet, Myriam, 63110 Beaumont (FR)
(74) Mandataire: Laget, Jean-Loup

(56) Documents cités:
- EP-A- 0 881 060
- DE-B3-102004 016 288
- US-A1- 2002 166 373

## Description

La présente invention a pour objet un système de caractérisation de l'action d'un pneumatique d'un véhicule sur le sol et du sol lui-même.

L'évolution du monde économique et politique met en évidence l'omniprésence de la dimension environnementale et du concept de développement durable.

Afin d'évaluer les conséquences des activités humaines sur l'environnement, il est nécessaire de disposer de moyens analytiques répondant notamment aux besoins d'identification rapide dès le début d'un processus de dégradation (salinisation, emploi d'engins de plus en plus lourds), de la surveillance d'un site (pollution agricole ou industrielle) et de compréhension des phénomènes de transfert, de migration ou de rétention des intrants (utilisation de produits phytosanitaires, épandage de boues de stations d'épuration). En effet, un sol dégradé peut présenter des risques environnementaux en ne jouant plus ses divers rôles et en affectant la qualité des milieux naturels comme les nappes d'eau souterraines. Il est donc essentiel de limiter, d'identifier et de surveiller les dégradations des sols.

Actuellement, les propriétés physico-chimiques des sols sont généralement déterminées par le prélèvement d'échantillons. Cependant, l'obtention des résultats peut s'avérer longue (choix du nombre et des emplacements de prélèvements, attente des résultats), difficile (nature des matériaux, accessibilité des points de prélèvements), coûteuse (types d'analyses), voire dangereuse (manipulation d'échantillons prélevés dans une zone contaminée).

Pour palier ces inconvénients, il est donc intéressant de disposer d'un système de caractérisation permettant d'estimer de manière non destructive et en continu les propriétés physico-chimiques d'un sol, par exemple à l'échelle d'une parcelle agricole. Un des objectifs de l'invention est donc de permettre le suivi des évolutions spatiales et temporelles d'un sol dans le cadre de l'évaluation des conséquences des activités humaines sur l'environnement.

De plus, la connaissance des variations de la nature et de l'état d'un sol, notamment lors d'opérations culturales, forestières ou d'entretien des espaces verts, mais également lors d'opérations de chantiers du bâtiment ou des travaux publics, est un élément essentiel d'un point de vue de la sécurité des opérateurs et des engins. Ainsi, un autre objectif de l'invention est de permettre une assistance à la conduite permettant d'assurer la sûreté lors de l'utilisation de ces engins.

Le pneumatique est le seul organe d'un véhicule en contact avec le sol. Il est donc l'organe du véhicule le plus adapté pour recevoir des capteurs intégrés capables de caractériser le sol ou les contraintes exercées sur lui. La particularité du pneumatique est de se déformer proportionnellement aux contraintes subies, ce qui permet, en mesurant cette déformation, d'établir une corrélation entre la déformation et les contraintes qui lui sont appliquées par le sol et le véhicule.

Le document US 2002/0166373 décrit un pneumatique muni de capteurs aptes à mesurer des déformations du pneumatique selon le préambule de la revendication 1, c'est-à-dire un dispositif de surveillance de la déformation d'un pneumatique. Cependant, le dispositif décrit dans ce document ne permet pas de déterminer des propriétés physico-chimiques du sol.

Le document US 2004/0158403 décrit une méthode de traitement des mesures de résistivité électrique géoréférencées pour la cartographie des sols en temps réel. Ce dispositif permet d'identifier des zones homogènes présentant des caractéristiques différentes, mais pas de déterminer les causes de variations d'une zone à l'autre.

Le document EP-A-0 881 060 décrit un pneumatique comportant des éléments conducteurs afin de favoriser un déchargement electrostatique de surface.

La présente invention a pour but de proposer un système de caractérisation qui évite au moins certains des inconvénients précités et qui permette d'estimer, de manière non destructive et en continu, l'action d'un pneumatique sur le sol et des caractéristiques d'un sol, et d'en suivre les évolutions spatiales et temporelles. Ce système de caractérisation a notamment pour but d'évaluer les conséquences sur l'environnement des passages répétés des engins et de garantir la sécurité lors de leur utilisation.

A cet effet, l'invention a pour objet un système de caractérisation pour véhicule, ledit véhicule comportant des roues, chacune desdites roues comprenant un pneumatique, au moins une desdites roues comportant un dispositif de mesure de déformation pour mesurer une déformation instantanée dudit pneumatique de ladite roue, ledit dispositif de mesure de déformation comprenant des moyens de détermination de la position d'un point de référence dudit pneumatique par rapport à un repère associé à ladite roue, dans au moins une des trois directions dudit repère, ledit dispositif de mesure de déformation étant destiné à être connecté à un moyen de traitement apte à déterminer une contrainte exercée sur ledit pneumatique en fonction de ladite position, caractérisé en ce que
ledit système de caractérisation comporte un circuit électrique de mesure comportant des éléments conducteurs, chacun desdits éléments conducteurs étant disposé sur le pneumatique d'une roue, lesdits éléments conducteurs étant aptes à se trouver en contact avec le sol pendant au moins une portion de la révolution de ladite roue, ledit circuit électrique étant apte à permettre, lorsque lesdits éléments conducteurs sont en contact avec le sol, la mesure d'un paramètre électrique entre lesdits éléments conducteurs, ledit circuit électrique étant destiné à être connecté à un moyen de traitement apte à déterminer et à mémoriser l'impédance électrique du sol.

Avantageusement, le dispositif de mesure de déformation du pneumatique est couplé à des mesures électriques de caractérisation des propriétés des sols pour apprécier le comportement du véhicule à des fins de performance ou de sécurité et son action sur le sol.

Selon un autre mode particulier de réalisation de l'invention, lesdits éléments conducteurs sont disposés sur deux pneumatiques différents dudit véhicule.

Avantageusement, ledit circuit électrique de mesure comporte un générateur apte à générer un courant entre lesdits éléments conducteurs.

De préférence, ledit paramètre électrique est une différence de potentiel.

Avantageusement, le moyen de traitement est apte à déterminer une caractéristique du sol à partir de l'impédance électrique du sol et des déformations du pneumatique.

Selon un mode particulier de réalisation de l'invention, lesdits moyens de détermination de la position du point de référence comprennent trois capteurs de déplacement linéaire, disposés sur la jante de ladite roue, ledit point de référence étant un point de la surface interne dudit pneumatique.

Selon un autre mode de réalisation particulier de l'invention, lesdits moyens de détermination de la position du point de référence comprennent un capteur ultrasonore, comportant trois récepteurs disposés sur la jante de ladite roue et un émetteur, constituant ledit point de référence, disposé sur la face interne dudit pneumatique.

Selon un autre mode de réalisation particulier de l'invention, lesdits moyens de détermination de la position du point de référence comprennent un moyen d'acquisition d'image, disposé sur la jante de ladite roue, la surface interne dudit pneumatique comportant un motif.

Selon un autre mode de réalisation particulier de l'invention, lesdits moyens de détermination de la position du point de référence comprennent un capteur à variation d'inductance, la surface interne dudit pneumatique comportant une trame métallique.

Avantageusement, le système de caractérisation pour véhicule comporte un moyen d'alerte du conducteur apte à se déclencher lorsque la déformation dudit pneumatique selon un axe dudit repère dépasse un seuil, ledit seuil étant fonction de l'impédance électrique mesurée.

De préférence, le système de caractérisation pour véhicule est apte à transmettre les données relatives à la déformation dudit pneumatique et à l'impédance électrique mesurée à une unité centrale de commande du véhicule pour émettre une alarme ou permettre la commande d'un organe du véhicule ou des outils associés en fonction de la déformation du pneumatique et de l'impédance électrique mesurée.

De préférence, le système de caractérisation pour véhicule comporte un dispositif de localisation par satellite, connecté audit moyen de traitement, ledit moyen de traitement étant apte à associer une caractéristique du sol avec des coordonnées du lieu de la mesure correspondante.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés. Sur ces dessins :
- la figure 1 est une vue partielle, simplifiée et en coupe transversale d'une roue d'un véhicule montrant un dispositif de mesure de déformation selon un mode de réalisation de l'invention ;
- la figure 2 est une vue partielle, simplifiée et en perspective de la roue de la figure 1 montrant les éléments conducteurs d'un dispositif de mesure d'impédance électrique du sol selon un mode de réalisation de l' invention ;
- la figure 3 est un schéma structurel du dispositif de mesure d'impédance électrique du sol de la figure 2 ;
- la figure 4 est un graphique montrant l'évolution de la déformation du pneumatique de la roue de la figure 1 en fonction de la valeur d'un couple moteur ;
- la figure 5 est un graphique montrant l'évolution de la déformation du pneumatique de la roue de la figure 1, en fonction de la valeur d'un couple moteur, pour des sols de dureté différente ; et
- la figure 6 est une vue schématique d'une roue illustrant la détermination de l'enfoncement de la roue dans le sol selon une variante de l'invention.

L'invention consiste à doter un ou plusieurs pneumatiques d'un véhicule, par exemple un tracteur, d'un ensemble de capteurs permettant de mesurer simultanément les déformations du pneumatique et certaines caractéristiques du sol afin d'estimer les contraintes exercées sur le sol, ces contraintes dépendant à la fois du véhicule et du sol lui-même.

Le système de caractérisation peut équiper des véhicules utilisés pour tout type d'applications, par exemple véhicules routiers, agricoles, d'entretien des espaces, génie civil, militaires, aviation.

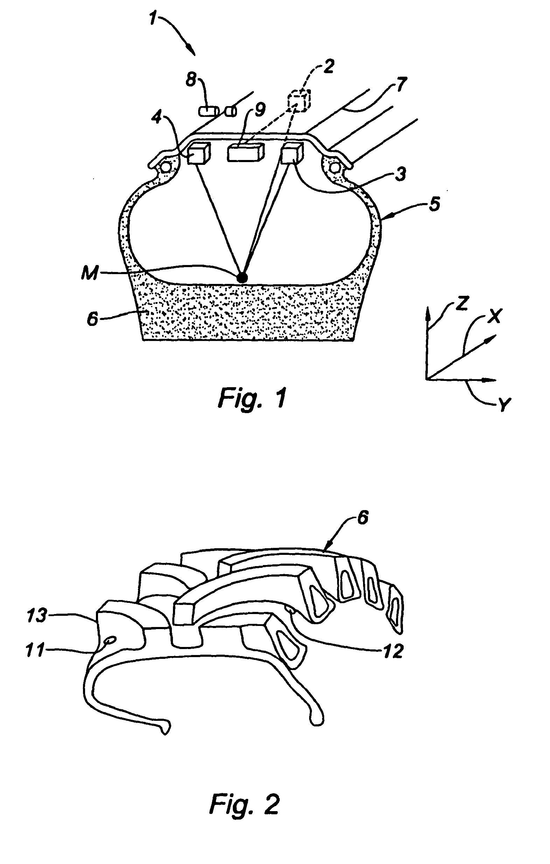

En se référant à la figure 1, on voit un dispositif de mesure de déformation 1. Le dispositif 1 comporte trois capteurs de déplacement linéaire 2, 3, 4 à fils disposés dans une roue 5 d'un véhicule (non représenté). Les capteurs 2, 3, 4 sont destinés à mesurer les déplacements relatifs, selon les trois axes X, Y et Z d'un repère, d'un point de référence M du pneumatique 6 par rapport à la jante 7. Le point M est par exemple situé au centre de la face interne du pneumatique 6. Un tel dispositif est connu en soi.

Le dispositif 1 comporte un capteur 8, par exemple angulaire ou détecteur de proximité, qui est disposé sur la jante 7. Le capteur 8 permet de repérer la position du point de référence M par rapport à la verticale (axe Z), ce qui permet de déterminer à quels moments le point M se trouve à proximité du sol.

Le dispositif 1 comporte un moyen de transmission sans fil 9, disposé dans le pneumatique 6 et connecté aux capteurs 2, 3, 4, 8, qui permet de transmettre les données provenant des capteurs vers un dispositif de traitement des données (non représenté) du véhicule.

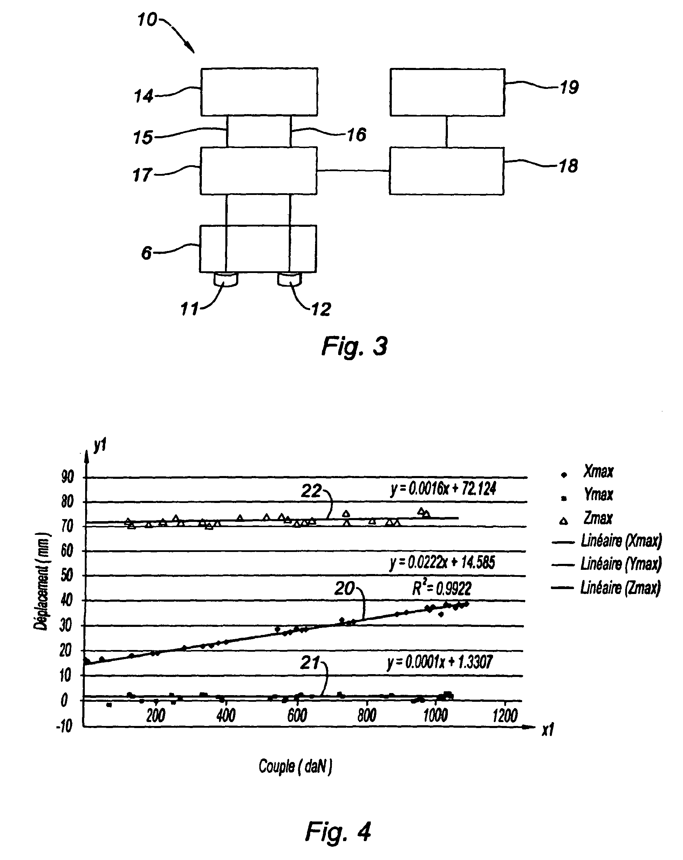

Les figures 2 et 3 montrent un dispositif de mesure d'impédance électrique 10 du sol. Le dispositif 10 comporte deux éléments conducteurs 11 et 12, qui sont disposées sur la face externe du pneumatique 6. Dans un mode de réalisation, les éléments conducteurs 11, 12 sont placées à la base d'une barrette 13 du pneumatique 6, de manière à entrer en contact avec le sol lorsque celui-ci est suffisamment meuble ou humide pour autoriser la pénétration des barrettes 13. Cette configuration permet aux éléments conducteurs 11, 12 d'être en contact avec le sol au moment où celui-ci est particulièrement sensible à la dégradation, c'est-à-dire lorsqu'il est meuble et/ou humide, tout en permettant au véhicule de circuler sur route sans dommage pour les éléments conducteurs 11, 12. En variante, les éléments conducteurs 11, 12 peuvent être disposées sur deux pneumatiques du véhicule, respectivement.

Le dispositif 10 comporte un générateur 14, connecté aux éléments conducteurs 11, 12 par des fils 15, 16 et permettant l'injection d'un courant électrique alternatif dans les éléments conducteurs 11, 12. Un moyen de mesure 17, connecté aux éléments conducteurs 11, 12, permet l'acquisition de la différence de potentiel créée par la circulation du courant électrique injecté par le générateur 14.

Le moyen de mesure 17 permet la détermination de l'impédance électrique du sol par application de la loi d'Ohm. Un dispositif de traitement des données 18 du véhicule, comprenant un moyen de stockage, est connecté au moyen de mesure 17 et permet la mémorisation des différentes valeurs déterminées. La communication entre le dispositif de traitement 18 et le moyen de mesure 17 peut être filaire ou sans fil.

Le dispositif de traitement 18 peut-être connecté à un système de localisation par satellite, par exemple un système GPS 19, afin de disposer de données géoréférencées.

On va maintenant décrire le fonctionnement du système de caractérisation. Lorsque le point de référence M se trouve à proximité du sol, ce qui est détecté par le capteur 8, les déformations du pneumatique 6 selon les axes X, Y et Z en ce point sont déterminées. On notera que les mesures de déformations peuvent être effectuées uniquement lorsque le point M se trouve à proximité du sol, ou bien les mesures peuvent être effectuées en continu, le dispositif de traitement permettant, à partir des données fournies par le capteur 8, de sélectionner les mesures pertinentes, c'est-à-dire les mesures effectuées lorsque le point M se trouve à proximité du sol.

Pour un sol donné, les déformations mesurées au point M sur plusieurs révolutions de la roue 5 permettent d'estimer les contraintes exercées sur l'ensemble du pneumatique 6. Pour cela, la mémoire du dispositif de traitement comporte des fonctions de référence de la déformation du pneumatique 6 selon chacun des axes X, Y et Z en fonction d'une ou de plusieurs contrainte(s), par exemple le couple moteur. Les déformations mesurées peuvent ainsi être comparées à des valeurs fournies par les fonctions de référence pour déterminer les contraintes exercées sur le pneumatique 6 et donc sur le sol.

A titre d'exemple, la figure 4 montre trois courbes de référence représentant les déformations du point M (axe yl), selon l'axe X, courbe 20, l'axe Y, courbe 21 et l'axe Z, courbe 22, en fonction de la valeur d'un couple moteur exercé sur la roue selon l'axe X (axe x1), et d'une charge dynamique constante de 2500 kg. Cette figure montre que les déformations selon les axes Y et Z dépendent assez peu de la valeur du couple moteur. Le décalage de la courbe 21 par rapport à 0 est lié au fait que les mesures ont été effectuées sur une surface en pente. Le décalage de la courbe 22 est lié à l'existence d'une charge constante sur le pneumatique 6.

De manière générale, la contrainte exercée selon l'axe X correspond au couple moteur exercé sur le pneumatique 6. Elle peut être positive pour un pneumatique moteur ou négative pour un pneumatique tracté.

Dans le premier cas, par exemple lorsque le pneumatique 6 équipe un tracteur, la contrainte sur la roue motrice correspond au couple moteur à fournir pour compenser la résistance au roulement du tracteur, à laquelle s'ajoute la résistance à la traction des outils (outils de travail du sol portés ou traînés, remorques, par exemple). Dans ce cas, l'information peut être utile soit pour cartographier la variation de structure intra-parcellaire (outil de travail du sol), soit pour agir sur des organes du véhicule permettant de moduler l'adhérence à des fins de performances ou de sécurité d'utilisation.

Dans le second cas, par exemple lorsque le pneumatique 6 équipe une remorque ou un outil tracté, cette contrainte correspond à la résistance au roulement. Cette information proportionnelle à la charge, mais aussi à la portance du sol, est importante pour prévenir les dégradations durables du sol.

La contrainte exercée selon l'axe Y correspond à la contrainte latérale exercée sur le pneumatique 6.

Cette contrainte varie en fonction d'un virage, d'une pente ou d'un outil exerçant un effort latéral. Cette information peut être utile par exemple pour corriger soit la trajectoire d'une machine, soit le réglage de déport ou de dévers de certains outils.

La contrainte exercée selon l'axe Z correspond à la charge verticale exercée sur le pneumatique 6.

Cette information peut varier de manière importante en dynamique, en fonction de la position ou du transfert de charge provoqué par un outil porté ou traîné. Comparée avec les contraintes des autres pneumatiques de la machine, elle est essentielle pour prédire un risque de renversement latéral, un cabrage ou le risque de perte de contrôle de direction sur route.

La contrainte liée à la charge dynamique est également un élément prépondérant pour prévenir ou enregistrer les dégradations durables liées aux déplacements des machines sur les sols en milieux naturels (par exemple une plage), agricoles ou forestiers.

Les déformations du pneumatique 6 en fonction des contraintes subies selon les trois axes X, Y et Z répondent à des lois linéaires en fonction de la pression, de la contrainte normale, des contraintes latérales et du couple moteur.

Cependant, pour les véhicules circulant sur des sols de duretés différentes, la déformation selon l'axe Z varie, à contrainte égale, en fonction du type de sol. En effet, dans ce cas particulier, la surface de contact entre le pneumatique 6 et le sol ne dépend plus uniquement de la déformation du pneumatique, mais de la combinaison des déformations du pneumatique 6 et du sol.

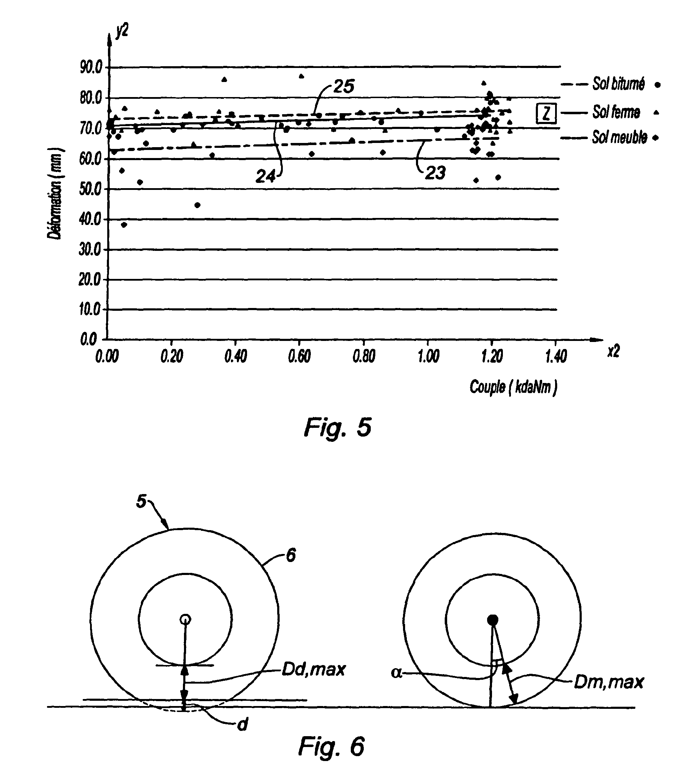

La figure 5 montre trois courbes de référence de la déformation du pneumatique selon l'axe Z (axe y2) en fonction du couple moteur (axe x2), respectivement associées à un sol meuble, courbe 23, un sol ferme, courbe 24 et un sol bitumé, courbe 25. Dans ce cas, la dureté du sol ne permet plus de différencier les variations dues à la charge dynamique de celles dues à la variation de dureté du sol. En d'autres termes, il n'est pas possible de déterminer de manière fiable la courbe de référence qui doit être utilisée pour estimer les contraintes exercées sur le pneumatique en fonction des déformations mesurées.

Dans ce cas, il est donc nécessaire de compléter les mesures de déformation d'un point M du pneumatique 6 avec des mesures permettant de caractériser le type de sol.

Pour cela, simultanément aux mesures de déformation, l'impédance électrique du sol est déterminée. En effet, la facilité avec laquelle le courant électrique circule dans le sol dépend en particulier de sa texture, de sa structure et de son humidité. Sachant que la dureté du sol dépend de ces trois paramètres, il est alors possible de caractériser le sol sur lequel le véhicule circule et en déduire la fonction de référence à utiliser pour caractériser la charge dynamique.

Le système de caractérisation permet donc, à partir de l'association de méthodes mécaniques et électriques, de fournir des données quantitatives sur le niveau de dégradation d'un sol à l'échelle d'une zone d'intérêt. L'utilisation conjointe de mesures mécaniques et électriques permet de découpler les effets de l'humidité et de la densité, mais également de la charge ionique puisqu'il existe une corrélation forte entre les mesures de conductivité électrique et les propriétés physico-chimiques des sols, par exemple les teneurs en ions de la solution du sol (Cl⁻, HCO³⁻, SO₄²⁻, Na⁺, K+...). Le système permet donc par exemple la caractérisation des sols à l'échelle de la parcelle, pour répondre aux besoins liés à l'évaluation des conséquences des activités humaines sur l'environnement.

Associés à un moyen de localisation GPS, le système de caractérisation permet la construction de cartographies des parcelles dont la résolution spatiale dépend uniquement du trajet suivi par le véhicule et de la fréquence d'acquisition. Il présente l'avantage de ne pas nécessiter d'échantillonnage ponctuel, ce qui supprime le problème de non-représentativité des échantillons. Ces données géoréférencées peuvent alimenter des bases de données et servir à l'évaluation et au suivi (surveillance d'un sol à court, moyen et long termes) des conséquences des activités humaines, agricoles ou industrielles, sur l'environnement.

L'identification de zones sur de telles cartographies est essentielle par exemple pour une modulation de la profondeur de travail lors d'une opération de décompactage ou pour la surveillance de paramètres environnementaux du sol, paramètres liés au sol lui-même (humidité, densité, etc.) ou à la présence d'éléments extérieurs (engrais, pesticides, etc.).

Ainsi, un système d'alerte (non représenté), par exemple lumineux ou sonore, peut être prévu dans le véhicule. Dans ce cas, lorsque le dispositif de traitement détecte une contrainte présentant un risque pour le véhicule, par exemple un risque de cabrage, le système d'alerte prévient le conducteur. Ce système peut par exemple se déclencher lorsque la valeur d'une contrainte dépasse un seuil prédéfini, le seuil étant fonction de l'impédance électrique mesurée, puisque celle-ci permet de déterminer la courbe de référence qui doit être utilisée.

Les contraintes estimées peuvent également être transmises à une unité centrale de commande (non représentée) du véhicule, commandant des organes du véhicule. Par exemple, l'unité centrale de commande du véhicule peut limiter la vitesse du véhicule lorsque le sol est humide.

D'autres variantes sont possibles, par exemple plusieurs capteurs 2, 3, 4 peuvent être répartis sur la périphérie de la jante 7 afin de multiplier le nombre de points M de mesure donc le nombre de mesures par tour de roue 5.

Le dispositif de mesure de déformation 1 peut comporter un capteur ultrasonore constitué de trois récepteurs fixés sur la jante 7 et d'un émetteur fixé sur la face interne de la bande de roulement du pneumatique 6. Ce type de capteur donne de manière similaire, par trilatération, la position selon les axes X, Y et Z du point M sur lequel est fixé l'émetteur par une mesure de distance issue du temps écoulé entre l'onde émise et l'onde reçue.

Le dispositif de mesure de déformation 1 peut comporter une mire constituée d'une trame à base de points et/ou de lignes, placée sur la face interne de la bande de roulement du pneumatique 6. Un moyen d'acquisition constitué d'une caméra, d'un appareil photo numérique ou d'une cellule CCD, acquiert cette trame à chaque fois qu'elle passe au niveau du sol (position verticale basse du pneumatique). Le moyen d'acquisition est fixé sur la jante 7. La déformation du pneumatique 6 entraîne la déformation ou le déplacement de la trame, de sorte que, par analyse d'image, le déplacement des points (avant, arrière, droite, gauche) ou le grossissement de la trame vont permettre d'évaluer avec précision la déformation du pneumatique 6 selon les axes X, Y et Z. Une solution avantageuse de ce système consiste à réaliser une trame sur toute la partie intérieure de la bande de roulement, et à disposer un faisceau de fibres optiques (endoscope) en nombre suffisant pour obtenir une information correspondant à la fréquence souhaitée par tour de roue et à traiter successivement fibre par fibre l'information provenant uniquement de celle située en face de la partie du pneumatique 6 en contact avec le sol.

Le dispositif de mesure de déformation 1 peut comporter un capteur à variation d'inductance. Dans ce cas, la trame métallique interne standard ou spécifique au pneumatique 6 est utilisée, le capteur à variation d'inductance permettant de définir la position d'une zone du pneumatique selon les axes X, Y et Z.

Un moyen de traitement peut être intégré directement dans le pneumatique 6.

En variante des éléments conducteurs 11 et 12, les propriétés conductrices du pneumatique 6 peuvent être utilisées, des moyens d'isolation adaptés permettant d'isoler le pneumatique 6 de la jante 7. Dans ce cas, en présence de courant électrique, l'impédance est mesurée entre deux ou plusieurs pneumatiques d'un même véhicule. Des composants peuvent également être incorporés dans la gomme du pneumatique 6 au moment de sa fabrication pour le rendre conducteur.

Lorsque la nature du sol est connue, une détermination de l'enfoncement d'une roue 5 dans le sol (figure 6) peut permettre de déterminer sa dureté. On appelle D la distance du point de référence à la jante. La distance D correspond à la différence entre la distance du point de référence M à la jante 7, lorsque aucune charge n'est exercée sur le pneumatique 6, et la déformation d du pneumatique 6 au niveau du point de référence selon l'axe Z. On appelle α l'angle correspondant à la position angulaire du point de référence par rapport à la verticale lorsque la valeur de la déformation en ce point selon l'axe Z est maximale. La valeur maximale D_{m,max} sur un sol meuble est supérieure à la valeur maximale D_{d,max} sur un sol dur. De plus, les angles αₘ et α_{d} correspondants sont différents. Il est donc possible de définir, par la mesure de l'angle α, une fonction, qui dépend de l'écrasement selon l'axe Z, correspondant au type de sol. Dans ce cas, le dispositif de mesure d'impédance électrique n'est pas nécessaire.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de caractérisation pour véhicule, ledit véhicule comportant des roues (5), chacune desdites roues comprenant un pneumatique (6), au moins une desdites roues comportant un dispositif de mesure de déformation (1) pour mesurer une déformation instantanée dudit pneumatique de ladite roue, ledit dispositif de mesure de déformation comprenant des moyens de détermination (2, 3, 4, 8) de la position d'un point de référence (M) dudit pneumatique par rapport à un repère associé à ladite roue, dans au moins une des trois directions (X, Y, Z) dudit repère, ledit dispositif de mesure de déformation étant destiné à être connecté à un moyen de traitement apte à déterminer une contrainte exercée sur ledit pneumatique en fonction de ladite position,
ledit système de caractérisation comportant un circuit électrique de mesure comportant des éléments conducteurs (11, 12), **caractérisé en ce que** chacun desdits éléments conducteurs étant disposé sur le pneumatique d'une roue, lesdits éléments conducteurs étant aptes à se trouver en contact avec le sol pendant au moins une portion de la révolution de ladite roue, ledit circuit électrique étant apte à permettre, lorsque lesdits éléments conducteurs sont en contact avec le sol, la mesure d'un paramètre électrique entre lesdits éléments conducteurs, ledit circuit électrique étant destiné à être connecté à un moyen de traitement (18) apte à déterminer et à mémoriser l'impédance électrique du sol.

2. Système de caractérisation pour véhicule selon la revendication 1, **caractérisé par le fait que** le dispositif de mesure de déformation du pneumatique est couplé à des mesures électriques de caractérisation des propriétés des sols pour apprécier le comportement du véhicule à des fins de performance ou de sécurité et son action sur le sol.

3. Système de caractérisation pour véhicule selon la revendication 1, **caractérisé en ce que** lesdits éléments conducteurs (11, 12) sont disposés sur deux pneumatiques différents dudit véhicule.

4. Système de caractérisation pour véhicule selon la revendication 1, **caractérisé en ce que** ledit circuit électrique de mesure comporte un générateur (14) apte à générer un courant entre lesdits éléments conducteurs (11,12).

5. Système de caractérisation pour véhicule selon la revendication 1, **caractérisé en ce que** ledit paramètre électrique est une différence de potentiel.

6. Système de caractérisation pour véhicule selon la revendication 1, **caractérisé en ce que** le moyen de traitement (18) est apte à déterminer une caractéristique du sol à partir de l'impédance électrique du sol et des déformations du pneumatique.

7. Système de caractérisation pour véhicule selon la revendication 1, **caractérisé en ce que** lesdits moyens de détermination de la position du point de référence comprennent trois capteurs de déplacement linéaire (2, 3, 4), disposés sur la jante (7) de ladite roue (5), ledit point de référence (M) étant un point de la surface interne dudit pneumatique (6).

8. Système de caractérisation pour véhicule selon la revendication 1, **caractérisé en ce que** lesdits moyens de détermination de la position du point de référence comprennent un capteur ultrasonore, comportant trois récepteurs disposés sur la jante de ladite roue et un émetteur, constituant ledit point de référence, disposé sur la face interne dudit pneumatique.

9. Système de caractérisation pour véhicule selon la revendication 1, **caractérisé en ce que** lesdits moyens de détermination de la position du point de référence comprennent un moyen d'acquisition d'image, disposé sur la jante de ladite roue, la surface interne dudit pneumatique comportant un motif.

10. Système de caractérisation pour véhicule selon la revendication 1, **caractérisé en ce que** lesdits moyens de détermination de la position du point de référence comprennent un capteur à variation d'inductance, la surface interne dudit pneumatique comportant une trame métallique.

11. Système de caractérisation pour véhicule selon la revendication 1, **caractérisé en ce qu'**il comporte un moyen d'alerte du conducteur apte à se déclencher lorsque la déformation dudit pneumatique selon un axe dudit repère dépasse un seuil, ledit seuil étant fonction de l'impédance électrique mesurée.

12. Système de caractérisation pour véhicule selon la revendication 1, **caractérisé en ce qu'**il est apte à transmettre les données relatives à la déformation dudit pneumatique et à l'impédance électrique mesurée à une unité centrale de commande du véhicule pour permettre la commande d'un organe du véhicule ou des outils associés en fonction de la déformation du pneumatique et de l'impédance électrique mesurée.

13. Système de caractérisation pour véhicule selon la revendication 6, **caractérisé en ce qu'**il comporte un dispositif de localisation par satellite (19), connecté audit moyen de traitement (18), ledit moyen de traitement étant apte à associer une caractéristique du sol avec des coordonnées du lieu de la mesure correspondante.

## Claims

1. Vehicle characterization system, said vehicle having wheels (5), each of said wheels comprising a tire (6), at least one of said wheels having a deformation measuring device (1) for measuring an instantaneous deformation of said tire of said wheel, said deformation measuring device comprising means (2, 3, 4, 8) for determining the position of a reference point (M) of said tire with respect to a mark associated with said wheel, in at least one of the three directions (X, Y, Z) of said mark, said deformation measuring device to be connected to a processing means adapted for determining a stress applied to said tire depending on said position,
said characterization system having an electric measuring circuit having conductive elements (11, 12), **characterized in that** each of said conductive elements is arranged on the tire of a wheel, said conductive elements being adapted to be in touch with the ground during at least one portion of the turn of said wheel, said electric circuit being adapted, when said conductive elements are in touch with the ground, to allow for the measurement of an electric parameter between said conductive elements, said electric circuit to be connected to a processing means (18) adapted for determining and storing the electric impedance of the ground.

2. Vehicle characterization system according to claim 1, **characterized in that** the deformation measuring device of the tire is coupled with electric characterization measurements of the properties of the ground in order to appreciate the behavior of the vehicle for performance or security purposes and the effect thereof on the ground.

3. Vehicle characterization system according to claim 1, **characterized in that** said conductive elements (11, 12) are arranged on two different tires of said vehicle.

4. Vehicle characterization system according to claim 1, **characterized in that** said electric measuring circuit comprises a generator (14) adapted for generating a current between said conductive elements (11, 12).

5. Vehicle characterization system according to claim 1, **characterized in that** said electric parameter is a potential difference.

6. Vehicle characterization system according to claim 1, **characterized in that** the processing means (18) is adapted for determining a characteristic of the ground from the electric impedance of the ground and the deformations of the tire.

7. Vehicle characterization system according to claim 1, **characterized in that** said means for determining the position of the reference point comprise three linear displacement transducers (2, 3, 4), arranged on the rim (7) of said wheel (5), said reference point (M) being a point of the inner surface of said tire (6).

8. Vehicle characterization system according to claim 1, **characterized in that** said means for determining the position of the reference point comprise an ultrasonic sensor, having three receivers arranged on the rim of said wheel and an emitter forming said reference point arranged on the inner side of said tire.

9. Vehicle characterization system according to claim 1, **characterized in that** said means for determining the position of the reference point comprise an image acquisition means, arranged on the rim of said wheel, the inner surface of said tire having a pattern.

10. Vehicle characterization system according to claim 1, **characterized in that** said means for determining the position of the reference point comprise a variable inductance transducer, the inner surface of said tire having a metal raster.

11. Vehicle characterization system according to claim 1, **characterized in that** it comprises a driver alert means adapted to trigger when the deformation of said tire along an axis of said mark exceeds a threshold, said threshold being dependent on the measured electric impedance.

12. Vehicle characterization system according to claim 1, **characterized in that** it is adapted for transmitting the data regarding the deformation of said tire and the measured electric impedance to a central control unit of the vehicle in order to allow for control of a vehicle member or associated tools depending on the deformation of the tire and the measured electric impedance.

13. Vehicle characterization system according to claim 6, **characterized in that** it comprises a satellite locating device (19), connected to said processing means (18), said processing means being adapted for associating a characteristic of the ground with coordinates of the location of the corresponding measurement.

## Patentansprüche

1. Fahrzeug-Charakterisierungssystem, wobei das Fahrzeug Räder (5) aufweist, wobei jedes der Räder einen Reifen (6) umfasst, wobei mindestens eines der Räder über eine Verformungsmessvorrichtung (1) zum Messen einer momentanen Verformung des Reifens des Rads verfügt, wobei die Verformungsmessvorrichtung Mittel (2, 3, 4, 8) zum Bestimmen der Position eines Bezugspunkts (M) des Reifens im Verhältnis zu einer mit dem Rad verknüpften Markierung in mindestens einer der drei Richtungen (X, Y, Z) der Markierung umfasst, wobei die Verformungsmessvorrichtung dazu gedacht ist, mit einem Verarbeitungsmittel verbunden zu werden, das dazu geeignet ist, eine Belastung zu bestimmen, die auf den Reifen in Abhängigkeit von der Position ausgeübt wird,
wobei das Charakterisierungssystem über eine elektrische Messschaltung mit leitfähigen Elementen (11, 12) verfügt, **dadurch gekennzeichnet, dass** jedes der leitfähigen Elemente auf dem Reifen eines Rads angeordnet ist, wobei die leitfähigen Elemente dazu geeignet sind, mindestens während eines Teils der Umdrehung des Rads mit dem Boden in Berührung zu stehen, wobei die elektrische Schaltung dazu geeignet ist, wenn die leitfähigen Elemente mit dem Boden in Berührung stehen, die Messung eines elektrischen Parameters zwischen den leitfähigen Elementen zu ermöglichen, wobei die elektrische Schaltung dazu gedacht ist, mit einem Verarbeitungsmittel (18) verbunden zu werden, das dazu geeignet ist, die elektrische Impedanz des Bodens zu messen.

2. Fahrzeug-Charakterisierungssystem nach Anspruch 1, **dadurch gekennzeichnet, dass** die Verformungsmessvorrichtung des Reifens mit elektrischen Charakterisierungsmessungen der Eigenschaften des Bodens gekoppelt ist, um das Verhalten des Fahrzeugs zu Leistungs- oder Sicherheitszwecken und seine Auswirkung auf den Boden einzuschätzen.

3. Fahrzeug-Charakterisierungssystem nach Anspruch 1, **dadurch gekennzeichnet, dass** die leitfähigen Elemente (11, 12) an zwei verschiedenen Reifen des Fahrzeugs angeordnet sind.

4. Fahrzeug-Charakterisierungssystem nach Anspruch 1, **dadurch gekennzeichnet, dass** die elektrische Messschaltung einen Generator (14) umfasst, der dazu geeignet ist, zwischen den leitfähigen Elementen (11, 12) einen Strom zu erzeugen.

5. Fahrzeug-Charakterisierungssystem nach Anspruch 1, **dadurch gekennzeichnet, dass** der elektrische Parameter ein Potentialunterschied ist.

6. Fahrzeug-Charakterisierungssystem nach Anspruch 1, **dadurch gekennzeichnet, dass** das Verarbeitungsmittel (18) dazu geeignet ist, um eine Charakteristik des Bodens aus der elektrischen Impedanz des Bodens und den Verformungen des Reifens zu bestimmen.

7. Fahrzeug-Charakterisierungssystem nach Anspruch 1, **dadurch gekennzeichnet, dass** die Mittel zum Bestimmen der Position des Bezugspunkts drei lineare Wegaufnehmer (2, 3, 4) umfassen, die auf der Felge (7) des Rads (5) angeordnet sind, wobei der Bezugspunkt (M) ein Punkt der Innenfläche des Reifens (6) ist.

8. Fahrzeug-Charakterisierungssystem nach Anspruch 1, **dadurch gekennzeichnet, dass** die Mittel zum Bestimmen der Position des Bezugspunkts einen Ultraschallsensor umfassen, der drei auf der Felge des Rads angeordnete Empfänger und einen den Bezugspunkt bildenden Sender, der auf der Innenseite des Reifens angeordnet ist, umfasst.

9. Fahrzeug-Charakterisierungssystem nach Anspruch 1, **dadurch gekennzeichnet, dass** die Mittel zum Bestimmen der Position des Bezugspunkts ein Bilderfassungsmittel umfassen, das auf der Felge des Rads angeordnet ist, wobei die Innenseite des Reifens ein Muster aufweist.

10. Fahrzeug-Charakterisierungssystem nach Anspruch 1, **dadurch gekennzeichnet, dass** die Mittel zum Bestimmen der Position des Bezugspunkts einen Messwandler mit variabler Induktivität umfassen, wobei die Innenfläche des Reifens ein Metallraster aufweist.

11. Fahrzeug-Charakterisierungssystem nach Anspruch 1, **dadurch gekennzeichnet, dass** es ein Fahrerwarnmittel umfasst, das dazu geeignet ist, ausgelöst zu werden, wenn die Verformung des Reifens entlang einer Achse der Markierung einen Schwellenwert überschreitet, wobei der Schwellenwert von der gemessenen elektrischen Impedanz abhängig ist.

12. Fahrzeug-Charakterisierungssystem nach Anspruch 1, **dadurch gekennzeichnet, dass** es dazu geeignet ist, um Daten über die Verformung des Reifens und die gemessene elektrische Impedanz an eine zentrale Steuereinheit des Fahrzeugs zu übertragen, um die Steuerung eines Fahrzeugorgans oder dazugehörigen Hilfsmittel in Abhängigkeit von der Verformung der Reifens und der gemessenen elektrischen Impedanz zu ermöglichen.

13. Fahrzeug-Charakterisierungssystem nach Anspruch 6, **dadurch gekennzeichnet, dass** es eine satellitengestützte Ortungsvorrichtung (19) umfasst, die mit dem Verarbeitungsmittel (18) verbunden ist, wobei das Verarbeitungsmittel dazu geeignet ist, um eine Charakteristik des Bodens mit Koordinaten des Ortes der entsprechenden Messung zu verknüpfen.
